# EUROPEAN PATENT APPLICATION

(11) **EP 2 660 645 A1**
(43) Date of publication of application: **06.11.2013**
(21) Application number: 13166542.4
(22) Date of filing: 03.05.2013
(51) Int. Cl.: G02B 27/64, G02B 27/00

(54) **Head-mountable display system**

(30) Priority: 04.05.2012 GB 201207864
(71) Applicant: Sony Computer Entertainment Europe Limited, London W1F 7LP (GB)
(72) Inventor: Bickerstaff, Ian Henry, London, W1F 7LP (GB); Benson, Simon Mark, London, W1F 7LP (GB)
(74) Representative: Turner, James Arthur

(57) **Abstract**

A head-mountable display system comprises a frame to be mounted onto an observer's head, the frame defining one or two eye display positions which, in use, are positioned in front of a respective eye of the observer; a display element mounted with respect to each of the eye display positions, the display element providing a virtual image of a video display of a video signal from a video signal source to that eye of the observer; a motion detector for detecting motion of the observer's head; a high-pass filter arranged to generate a higher frequency component and a lower frequency component of the detected motion, according to a threshold frequency associated with the response of the high-pass filter; and a controller for controlling the display of the video signal in dependence upon the detected head motion, the controller acting to compensate for the higher frequency component of motion of the observer's head by moving the displayed image in the opposite direction to that of the detected motion.

## Description

This invention relates to head-mountable display systems.

A head-mountable display (HMD) is an image or video display device which may be worn on the head or as part of a helmet. Either one eye or both eyes are provided with small electronic display devices.

Some HMDs allow a displayed image to be superimposed on a real-world view. This type of HMD can be referred to as an optical see-through HMD and generally requires the display devices to be positioned somewhere other than directly in front of the user's eyes. Some way of deflecting the displayed image so that the user may see it is then required. This might be through the use of a partially reflective mirror placed in front of the user's eyes so as to allow the user to see through the mirror but also to see a reflection of the output of the display devices. In another arrangement, disclosed in EP-A-1 731 943 and US-A-2010/0157433, a waveguide arrangement employing total internal reflection is used to convey a displayed image from a display device disposed to the side of the user's head so that the user may see the displayed image but still see a view of the real world through the waveguide. Once again, in either of these types of arrangement, a virtual image of the display is created (using known techniques) so that the user sees the virtual image at an appropriate size and distance to allow relaxed viewing. For example, even though the physical display device may be tiny (for example, 10 mm x 10 mm) and may be just a few millimetres from the user's eye, the virtual image may be arranged so as to be perceived by the user at a distance of (for example) 20 m from the user, having a perceived size of 5 m x 5m.

Other HMDs, however, allow the user only to see the displayed images, which is to say that they obscure the real world environment surrounding the user. This type of HMD can position the actual display devices in front of the user's eyes, in association with appropriate lenses which place a virtual displayed image at a suitable distance for the user to focus in a relaxed manner - for example, at a similar virtual distance and perceived size as the optical see-through HMD described above. This type of device might be used for viewing movies or similar recorded content, or for viewing so-called virtual reality content representing a virtual space surrounding the user. It is of course however possible to display a real-world view on this type of HMD, for example by using a forward-facing camera to generate images for display on the display devices.

Although the original development of HMDs was perhaps driven by the military and professional applications of these devices, HMDs are becoming more popular for use by casual users in, for example, computer game or domestic computing applications.

This invention provides a head-mountable display system comprising:
a frame to be mounted onto an observer's head, the frame defining one or two eye display positions which, in use, are positioned in front of a respective eye of the observer;
a display element mounted with respect to each of the eye display positions, the display element providing a virtual image of a video display of a video signal from a video signal source to that eye of the observer;
a motion detector for detecting motion of the observer's head;
a high-pass filter arranged to generate a higher frequency component and a lower frequency component of the detected motion, according to a threshold frequency associated with the response of the high-pass filter; and
a controller for controlling the display of the video signal in dependence upon the detected head motion, the controller acting to compensate for the higher frequency component of motion of the observer's head by moving the displayed image in the opposite direction to that of the detected motion.

The invention recognises that relatively small, higher frequency movements, representing head wobble rather than a definite movement, can lead to a disparity between the amount of compensation applied by the human psycho-visual system and the amount of change in the apparent viewpoint applied by the HMD system. This disparity can lead to visual discomfort.

The invention addresses this by applying a compensation for small higher frequency movements in addition to that applied (in virtual reality type systems) in respect of lower frequency motion components.

Embodiments of the invention will now be described with reference to the accompanying drawings, in which:
Figure 1 schematically illustrates an HMD worn by a user;
Figure 2 is a schematic plan view of an HMD;
Figure 3 schematically illustrates the formation of a virtual image by an HMD;
Figure 4 schematically illustrates another type of display for use in an HMD;
Figure 5 schematically illustrates a pair of stereoscopic images;
Figure 6 schematically illustrates a change of view of user of an HMD;
Figures 7a and 7b schematically illustrate HMDs with motion sensing;
Figure 8 schematically illustrates a position sensor based on optical flow detection;
Figure 9 schematically illustrates image processing carried out in response to a detected change of view;
Figure 10 is a schematic graph of head position against time;
Figure 11 is a version of the schematic graph of Figure 10, after a high pass filtering and optional clipping process;
Figure 12 schematically illustrates a high pass filter and clipper;
Figure 13 schematically illustrates a moveable CCD device;
Figure 14 schematically illustrates a moveable lens; and
Figure 15 schematically illustrates a technique for digital compensation of head movement.

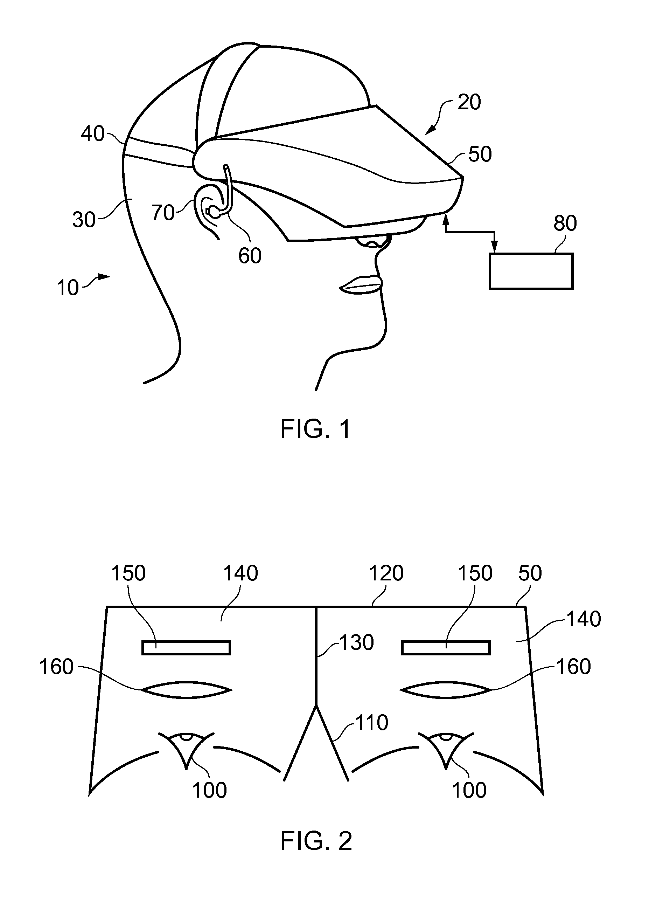

Referring now to Figure 1, a user 10 is wearing an HMD 20 on the user's head 30. The HMD comprises a frame 40, in this example formed of a rear strap and a top strap, and a display portion 50.

The HMD of Figure 1 completely obscures the user's view of the surrounding environment. All that the user can see is the pair of images displayed within the HMD.

The HMD has associated headphone earpieces 60 which fit into the user's left and right ears 70. The earpieces 60 replay an audio signal provided from an external source, which may be the same as the video signal source which provides the video signal for display to the user's eyes.

In operation, a video signal is provided for display by the HMD. This could be provided by an external video signal source 80 such as a video games or gaming machine or a data processing apparatus or machine (such as a personal computer), in which case the signals could be transmitted to the HMD by a wired or a wireless connection. Examples of suitable wireless connections include Bluetooth (R) connections. Audio signals for the earpieces 60 can be carried by the same connection. Similarly, any control signals passed from the HMD to the video (audio) signal source may be carried by the same connection.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

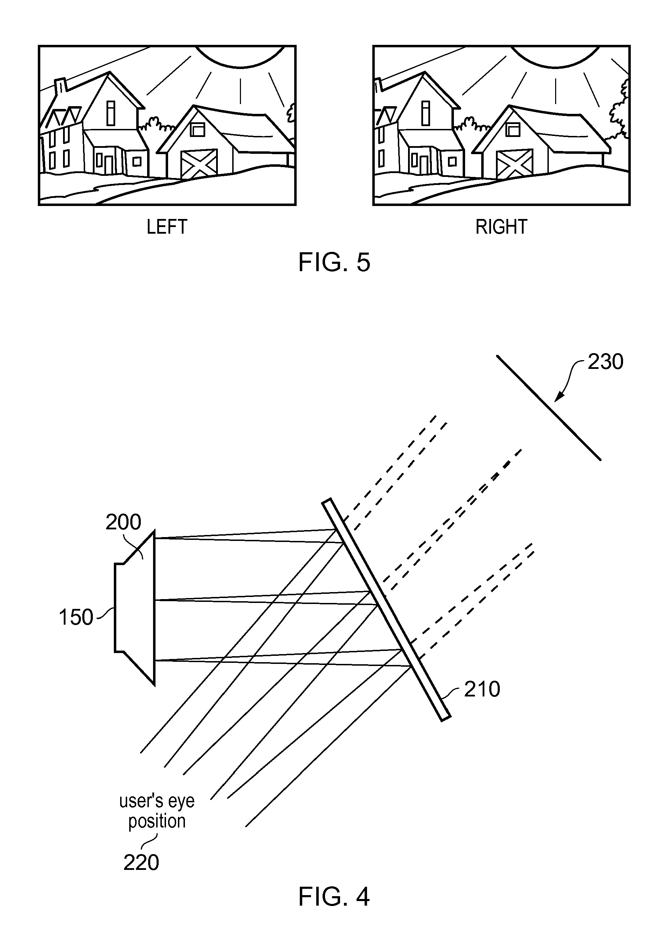

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other examples, the user's view of the external environment may not in fact be entirely obscured; the displayed images could be arranged so as to be superposed (from the user's point of view) over the external environment. An example of such an arrangement will be described below with reference to Figure 4.

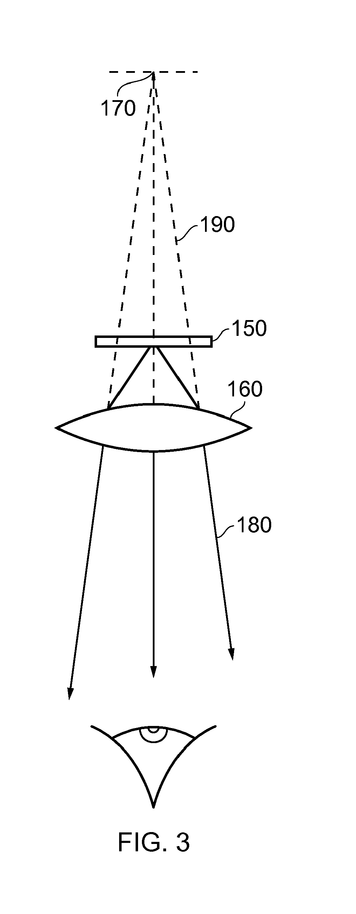

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

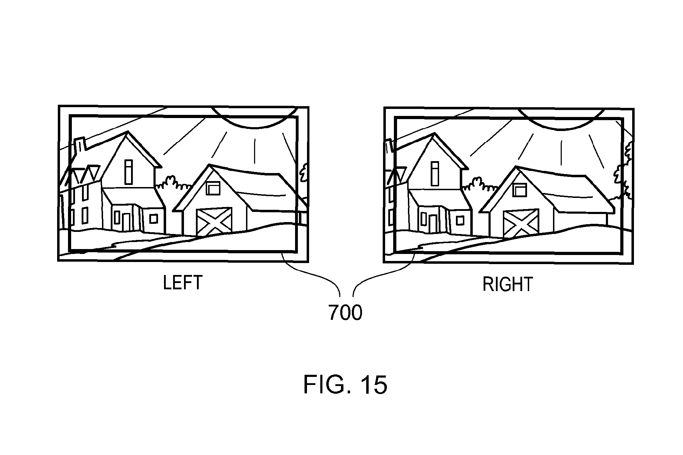

Note that the lateral displacements in Figure 5 (and those in Figure 15 to be described below) could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figures 5 and 15 because this gives the impression to the user that the user is viewing the scene through a pair of binoculars. The choice between these two arrangements is at the discretion of the system designer,

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint need to track movements with respect to a real or virtual space in which the user is located.

This tracking is carried out by detecting motion of the HMD and varying the apparent viewpoint of the displayed images so that the apparent viewpoint tracks the motion. However, whether or not the viewpoint is changed in this way, a separate compensation is applied in respect of higher frequency (and in embodiments of the invention, limited amplitude) motion components, to compensate for image shake caused by head wobble on the part of the user.

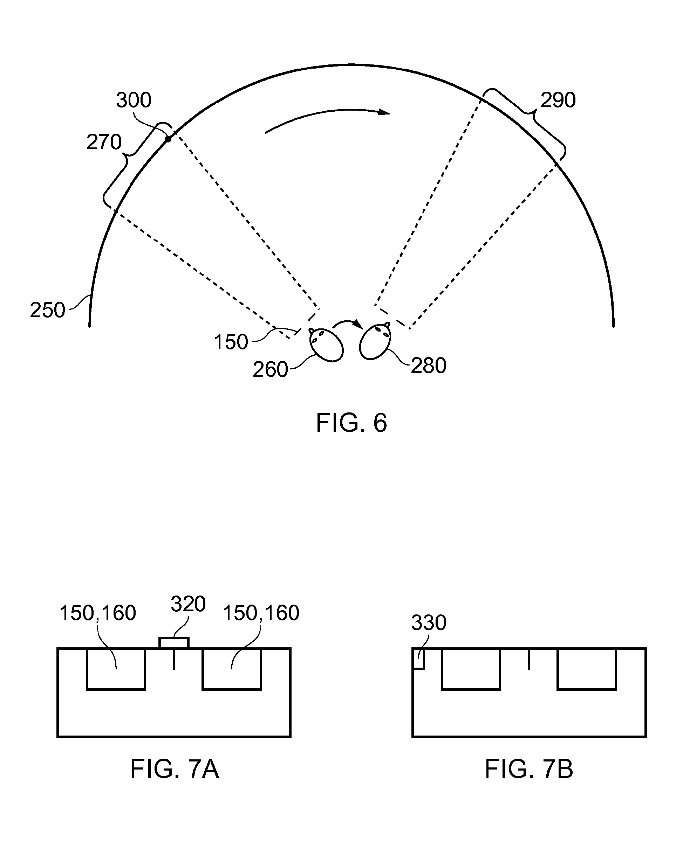

Figure 6 schematically illustrates the effect of a user head movement in a VR or AR system.

Referring to Figure 6, a virtual environment is represented by a (virtual) spherical shell 250 around a user. Because of the need to represent this arrangement on a two-dimensional paper drawing, the shell is represented by a part of a circle, at a distance from the user equivalent to the separation of the displayed virtual image from the user. A user is initially at a first position 260 and is directed towards a portion 270 of the virtual environment. It is this portion 270 which is represented in the images displayed on the display elements 150 of the user's HMD.

Consider the situation in which the user then moves his head to a new position and/or orientation 280. In order to maintain the correct sense of the virtual reality or augmented reality display, the displayed portion of the virtual environment also moves so that, at the end of the movement, a new portion 290 is displayed by the HMD.

So, in this arrangement, the apparent viewpoint within the virtual environment moves with the head movement. If the head rotates to the right side, for example, as shown in Figure 6, the apparent viewpoint also moves to the right from the user's point of view. If the situation is considered from the aspect of a displayed object, such as a displayed object 300, this will effectively move in the opposite direction to the head movement. So, if the head movement is to the right, the apparent viewpoint moves to the right but an object such as the displayed object 300 which is stationary in the virtual environment will move towards the left of the displayed image and eventually will disappear off the left-hand side of the displayed image, for the simple reason that the displayed portion of the virtual environment has moved to the right whereas the displayed object 300 has not moved in the virtual environment.

Figures 7a and 7b schematically illustrated HMDs with motion sensing. The two drawings are in a similar format to that shown in Figure 2. That is to say, the drawings are schematic plan views of an HMD, in which the display element 150 and optical elements 160 are represented by a simple box shape. Many features of Figure 2 are not shown, for clarity of the diagrams. Both drawings show examples of HMDs with a motion detector for detecting motion of the observer's head.

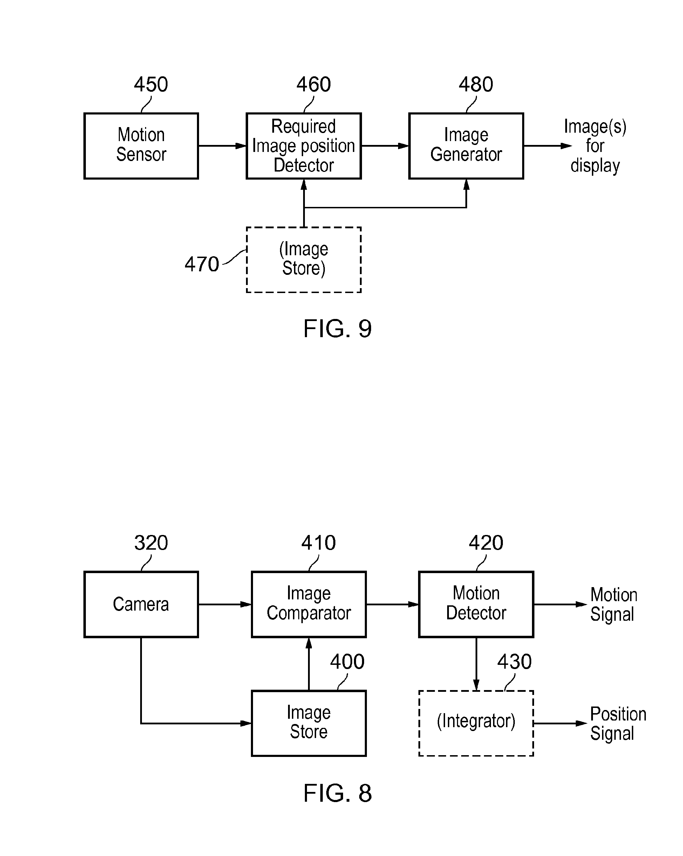

In Figure 7a, a forward-facing camera 320 is provided on the front of the HMD. This does not necessarily provide images for display to the user (although it could do so in an augmented reality arrangement). Instead, its primary purpose in the present embodiments is to allow motion sensing. A technique for using images captured by the camera 320 for motion sensing will be described below in connection with Figure 8. In these arrangements, the motion detector comprises a camera mounted so as to move with the frame; and an image comparator operable to compare successive images captured by the camera so as to detect inter-image motion.

Figure 7b makes use of a hardware motion detector 330. This can be mounted anywhere within or on the HMD. Examples of suitable hardware motion detectors are piezoelectric accelerometers or optical fibre gyroscopes. It will of course be appreciated that both hardware motion detection and camera-based motion detection can be used in the same device, in which case one sensing arrangement could be used as a backup when the other one is unavailable, or one sensing arrangement (such as the camera) could provide data for changing the apparent viewpoint of the displayed images, whereas the other (such as an accelerometer) could provide data for image stabilisation.

Figure 8 schematically illustrates one example of motion detection using the camera 320 of Figure 7a.

The camera 320 is a video camera, capturing images at an image capture rate of, for example, 25 images per second. As each image is captured, it is passed to an image store 400 for storage and is also compared, by an image comparator 410, with a preceding image retrieved from the image store. The comparison uses known block matching techniques (so-called "optical flow" detection) to establish whether substantially the whole image has moved since the time at which the preceding image was captured. Localised motion might indicate moving objects within the field of view of the camera 320, but global motion of substantially the whole image would tend to indicate motion of the camera rather than of individual features in the captured scene, and in the present case because the camera is mounted on the HMD, motion of the camera corresponds to motion of the HMD and in turn to motion of the user's head.

The displacement between one image and the next, as detected by the image comparator 410, is converted to a signal indicative of motion by a motion detector 420. If required, the motion signal is converted by to a position signal by an integrator 430.

As mentioned above, as an alternative to, or in addition to, the detection of motion by detecting inter-image motion between images captured by a video camera associated with the HMD, the HMD can detect head motion using a mechanical or solid state detector 330 such as an accelerometer. This can in fact give a faster response in respect of the indication of motion, given that the response time of the video-based system is at best the reciprocal of the image capture rate. In some instances, therefore, the detector 330 can be better suited for use with the higher frequency motion correction to be described below. However, in other instances, for example if a high image rate camera is used (such as a 200 Hz capture rate camera), a camera-based system may be more appropriate.

Other position detecting techniques are of course possible. For example, a mechanical arrangement by which the HMD is linked by a moveable pantograph arm to a fixed point (for example, on a data processing device or on a piece of furniture) may be used, with position and orientation sensors detecting changes in the deflection of the pantograph arm. In other embodiments, a system of one or more transmitters and receivers, mounted on the HMD and on a fixed point, can be used to allow detection of the position and orientation of the HMD by triangulation techniques. For example, the HMD could carry one or more directional transmitters, and an array of receivers associated with known or fixed points could detect the relative signals from the one or more transmitters. Or the transmitters could be fixed and the receivers could be on the HMD. Examples of transmitters and receivers include infra-red transducers, ultrasonic transducers and radio frequency transducers. The radio frequency transducers could have a dual purpose, in that they could also form part of a radio frequency data link to and/or from the HMD, such as a Bluetooth ® link.

Figure 9 schematically illustrates image processing carried out in response to a detected position or change in position of the HMD.

As mentioned above in connection with Figure 6, in some applications such as virtual reality and augmented reality arrangements, the apparent viewpoint of the video being displayed to the user of the HMD is changed in response to a change in actual position or orientation of the user's head.

With reference to Figure 9, this is achieved by the motion sensor 450 (such as the arrangement of Figure 8 or the motion detector 330 of Figure 7b) supplying data indicative of motion and/or current position to a required image position detector 460, which translates the actual position of the HMD into data defining the required image for display. An image generator 480 accesses image data stored in an image store 470 if required, and generates the required images from the appropriate viewpoint for display by the HMD. The external video signal source can provide the functionality of the image generator 480 and act as a controller to compensate for the lower frequency component of motion of the observer's head by changing the viewpoint of the displayed image so as to move the displayed image in the opposite direction to that of the detected motion so as to change the apparent viewpoint of the observer in the direction of the detected motion.

Variation according to the lower frequency component is carried out by generating an image appropriate to the viewpoint at the time that the image is to be displayed. Because it takes a non-zero amount of time to generate and render an image, in some example arrangements the viewpoint used at the image generation process is in fact a prediction of the viewpoint that will be valid at the time of display. The prediction is based upon the lower frequency component of the detected motion and is obtained by extrapolating the current motion to a point in time which is ahead of the current time by the period of time taken to generate and render an image for display. The extrapolation may use a linear or a non-linear curve or profile fitted to the lower frequency component motion data available at the time that the extrapolation is performed. The extrapolation may be performed by the required image position detector, for example.

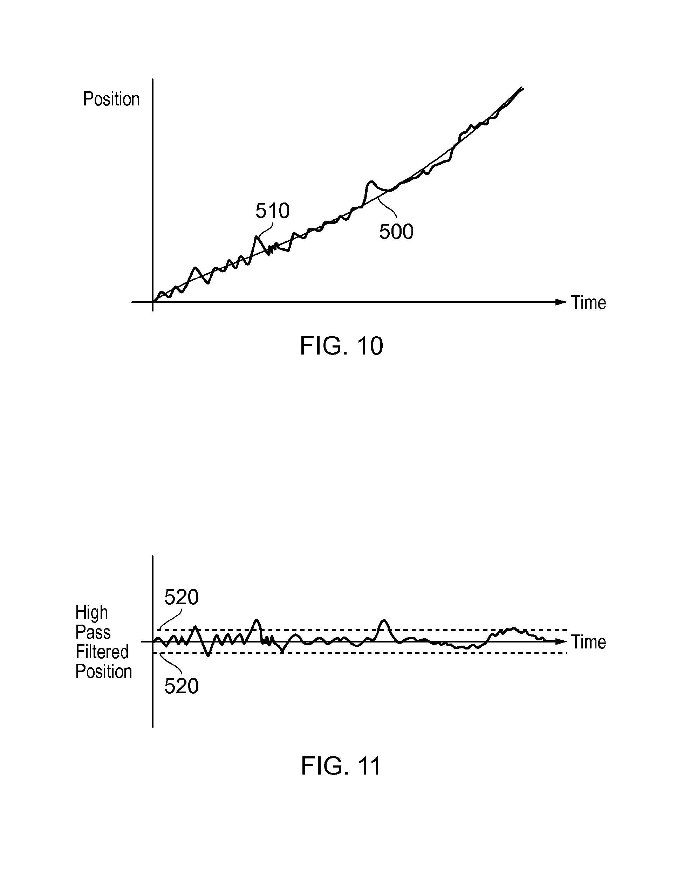

Figure 10 is a schematic graph of detected position against time. The change in detected position with respect to time conforms to a general trend indicated by a smooth line 500, but the actual detected change in position follows a more varied curve 510.

As discussed above, in VR systems the low frequency component or overall trend of the image movement causes the displayed image to be varied according to the system described above with reference to Figure 9. Alternatively, in systems used for applications such as movie replay, the overall trend of the detected motion of the user's head is irrelevant and has no effect upon the content which is displayed to the user. In these latter situations, the smooth trend curve, representing a lower frequency component of the detected motion, can be ignored. In either instance, however, the higher frequency component, representing relatively small amplitude wobbles of the user's head, is relevant to the image stabilisation techniques discussed in the present application.

Figure 11 schematically illustrates a high-pass filtered version of the graph of position against time, in which the smooth trend indicated by the trend curve 500 has been discarded by a high-pass filtering process, leaving only the small amplitude higher frequency component of the motion. It is this higher frequency component which can be used in image stabilisation. Optionally, the high frequency component can be clipped, which is to say that a threshold amplitude 520 is applied, and any excursions beyond the threshold amplitude are reduced or clipped by the thresholding process so as to be equal to the threshold amplitude.

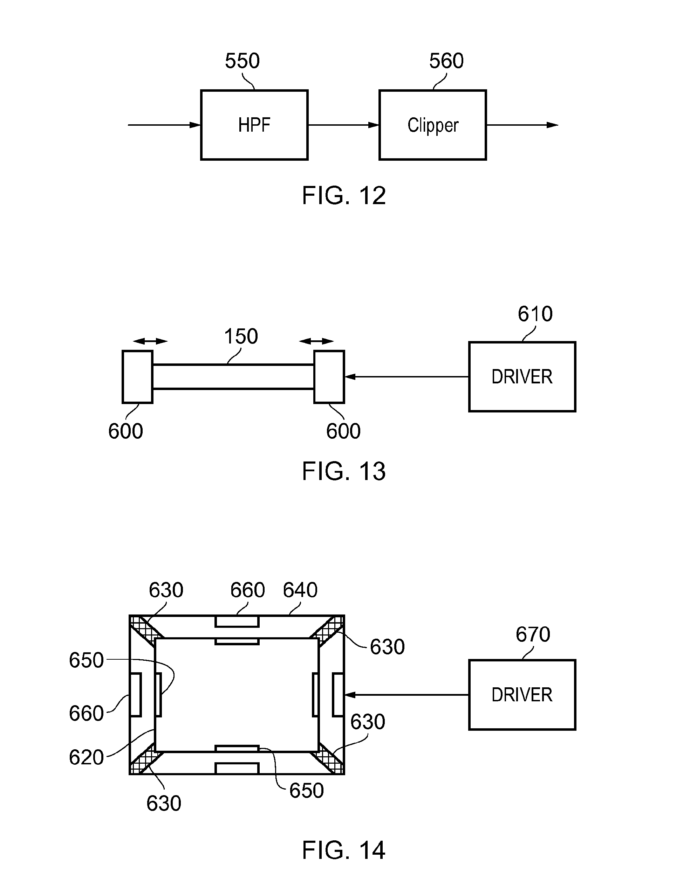

Figure 12 schematically illustrates a high pass filter 550 and clipper 560 arrangement as one example of an arrangement for carrying out the high-pass filtering and clipping operation described with respect to Figure 11. In the arrangement shown in Figure 12, the high-pass filter 550 may be implemented as a digital filter operating on a digitised version of the motion or position signal using conventional multi-tap finite impulse response filtering techniques, for example. The clipper 560 can be implemented digitally by simply applying the constraint of a maximum possible value to the output of the high pass filter 550. The high pass filter 550 is an example of a high-pass filter arranged to generate a higher frequency component and a lower frequency component of the detected motion, according to a threshold frequency associated with the response of the high-pass filter. The high pass filter 550 and the clipper 560 can cooperate to provide the function of a high pass filter also operable to apply clipping to the higher frequency component of the detected motion so as to limit the maximum detected motion in the higher frequency component to a predetermined clipping level.

It is, however, not a requirement to carry out the filtering and clipping operations in the digital (or even in the electrical) domain. For example, if the motion of the HMD is detected by an accelerometer, such as a mass-spring accelerometer, the mechanical properties of the accelerometer such as resonant frequencies and damping factors can be established so as to vary the response of the accelerometer with frequency, so that the detection of higher frequency motion components is enhanced and the detection of lower frequency motion components is inhibited. The clipping operation can be implemented in the mechanical system by, for example, mechanically restricting the maximum acceleration which can be detected by the accelerometer, for example by using a mechanical limit stop to prevent excursions of a mass-spring arrangement beyond a predetermined maximum excursion.

Note also that a higher frequency component can be obtained as the complement of a lower frequency component, so that if the complement of the output of a low-pass filter is used, this arrangement has the same technical effect as and is equivalent to the use of a high pass filter. Note also that a higher frequency component does not necessarily need to contain all frequency components above a threshold.

An example of a filter cut-off frequency, relating to the properties of a filter so that the HMD motion is considered as a "high frequency component" above the cut-off frequency, is 100 Hz. It will be appreciated that filter properties may be defined by such a cut-off frequency without this implying that the filter has a step change in response at that frequency.

Various techniques are available to provide image stabilisation in respect of the higher frequency component of detected motion. Three such techniques will be described with reference to Figures 13-15. In some embodiments, the display element may be moved by the controller in response to the higher frequency component of the detected motion. In other embodiments comprising one or more optical elements in an optical path from the display element to the eye of the observer, the controller is operable to move one or more of the optical elements in response to the higher frequency component of the detected motion.

The external video signal source or a controller forming part of the HMD can act as a controller for controlling the display of the video signal in dependence upon the detected head motion, the controller acting to compensate for the higher frequency component of motion of the observer's head by moving the displayed image in the opposite direction to that of the detected motion.

In any of these example arrangements, the correction in respect of the higher frequency component does not alter the viewpoint at which the image is rendered; instead it acts on an already-rendered image to alter the position relative to the user's eye at which the image is displayed. Note that this could be a physical alteration of the physical display position, for example by translating the display element or by applying a pixel shift to pixels for display. Such arrangements will also give rise to a change in the position of the virtual image relating to that displayed image. Or it could relate only to a change in the position of a virtual image, for example by shifting or otherwise altering one or more optical elements between the eye and the display element.

A basic feature of the image stabilisation techniques is that the motion applied to the image to provide image stabilisation in respect of the high frequency components of the detected motion is in the opposite direction to the movement of the HMD. So, for example, the HMD moves up, the image moves down; the HMD moves left, the image moves right, and so on. So the correction has the same sense as the adjustments made by, for example, a VR system, to implement a change in viewpoint. However there are significant differences between the correction techniques and the VR viewpoint adjustment techniques. For example, in some embodiments of the invention, the correction is performed by a mechanical change to the optical system providing the displayed images to the user's eyes, such as a motion of the display element and/or intervening optical elements. In other words, this is by a separate mechanism to that of the viewpoint adjustment in a VR system. In embodiments of the invention, the correction is performed in respect of higher frequency motion components which would normally be ignored or filtered out by a viewpoint adjustment system. In non-VR embodiments, such as those in which a movie or the like is replayed, there would normally be no image motion in response to HMD motion, but in the present embodiments corrective image motion is provided but only in respect of higher frequency motion components. Note that a significant technical feature of higher frequency motion components is that they have no dc component, so there is no concept of a steady value or a general trend in respect of such components. Further, even in embodiments such as that described with reference to Figure 15 below, the corrective adjustment is by changing a viewpoint within a rendered image, rather than by changing the viewpoint represented by the image as a whole.

Referring first to Figure 13, it is possible to apply physical movements to the display element 150, which may, for example, be a charge coupled device (CCD) display element. At the left-hand side of Figure 13, the display element has one or more associated actuators 600 which are operable, under the control of a driver circuit 610, two move the display element from side to side, or up and down, or both, to provide image stabilisation movements to compensate for the higher frequency component of the detected head motion. In Figure 13, the schematic diagram at the left-hand side may be considered as one or both of a plan view (in which case the schematic actuators are providing side to side movement) and a side view (in which case the schematic actuators 600 are providing up and down movement). In practice, a system may have actuators 600 (for example) on one side, on two orthogonal sides, on two opposite sides or on four sides of the display element 150.

As an alternative to moving the display elements to provide image stabilisation, it is possible to move one or more of the optical elements 160. An example of how this can be achieved is shown schematically in Figure 14. A lens or prism 620, forming part of the system of optical elements 160, is supported by a set of resilient supports 630 with respect to a frame 640. Metallic portions 650 are provided at the edges of the lens or prism 620 at an appropriate position such that they do not block the transmission of light by the lens or prism 620. A corresponding set of one or more electromagnets 660, operating under the control of a driver circuit 670, interact with the metallic portions 650 so as to deflect the lens or prism 650, laterally, rotationally or both, so as to cause a corresponding deviation in the passage of light from the display element 150 through the lens or prism 620. The deviation acts against the resilient supports 630, which tend to return the lens or prism 620 to a default neutral position when the influence of the electromagnets is removed.

Finally, Figure 15 schematically illustrates a technique for image stabilisation using digital image processing.

Figure 15 schematically illustrates two images for display by the HMD, for the left and right eye displays respectively. The arrangement is such that only a portion 700 of each image is displayed so as to be visible to the user; the periphery of each image is either not displayed or is displayed but not in a way that is visible to the user, possibly by blanking off the very outer periphery of the display element 150.

This then allows image stabilisation to be carried out by making small changes to the location of the displayed portion 700 relative to the overall outline of the available image data. The selection of the displayed portion can be digitally moved relative to the actual periphery of the image so as to apply an apparent compensating movement to the image as seen by the user.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the invention. Note also that in the context of an HMD system including an HMD, some or all of the processing (for example relating to the high pass filter, the controller and the like) may be performed at the HMD, and/or some or all may be performed at a separate processor unit or units, with the results or partial results being communicated to the HMD.

## Claims

1. A head-mountable display system comprising:
a frame to be mounted onto an observer's head, the frame defining one or two eye display positions which, in use, are positioned in front of a respective eye of the observer;
a display element mounted with respect to each of the eye display positions, the display element providing a virtual image of a video display of a video signal from a video signal source to that eye of the observer;
a motion detector for detecting motion of the observer's head;
a high-pass filter arranged to generate a higher frequency component and a lower frequency component of the detected motion, according to a threshold frequency associated with the response of the high-pass filter; and
a controller for controlling the display of the video signal in dependence upon the detected head motion, the controller acting to compensate for the higher frequency component of motion of the observer's head by moving the displayed image in the opposite direction to that of the detected motion.

2. A system according to claim 1, in which the controller acts to compensate for the lower frequency component of motion of the observer's head by changing the viewpoint of the displayed image so as to move the displayed image in the opposite direction to that of the detected motion so as to change the apparent viewpoint of the observer in the direction of the detected motion.

3. A system according to claim 1 or claim 2, in which the high pass filter is operable to apply clipping to the higher frequency component of the detected motion so as to limit the maximum detected motion in the higher frequency component to a predetermined clipping level.

4. A system according to any one of claims 1 to 3, in which the controller is operable to control the video signal source to provide a video signal for display having an apparent viewpoint dependent upon the lower frequency component of the detected motion.

5. A system according to claim 4, in which the controller is configured to change the position at which an image received as part of the video signal is displayed, relative to the user's eye position.

6. A system according to any one of the preceding claims, in which the controller is operable to move the display element in response to the higher frequency component of the detected motion.

7. A system according to any one of claims 1 to 5, comprising one or more optical elements in an optical path from the display element to the eye of the observer;
in which the controller is operable to move one or more of the optical elements in response to the higher frequency component of the detected motion.

8. A system according to any one of the preceding claims, in which the video signal source is a video gaming or data processing machine.

9. A system according to any one of the preceding claims, in which, in use, the virtual image is generated at a distance of more than one metre from the frame.

10. A system according to any one of the preceding claims, in which the motion detector comprises:
a camera mounted so as to move with the frame; and
an image comparator operable to compare successive images captured by the camera so as to detect inter-image motion.

11. A system according to any one of the preceding claims, in which the motion detector comprises an accelerometer.

12. A method of operation of a head-mountable display system having a frame to be mounted onto an observer's head, the frame defining one or two eye display positions which, in use, are positioned in front of a respective eye of the observer; and a display element mounted with respect to each of the eye display positions, the display element providing a virtual image of a video display of a video signal from a video signal source to that eye of the observer; the method comprising:
detecting motion of the observer's head;
generating a higher frequency component and a lower frequency component of the detected motion, according to a threshold frequency; and
controlling the display of the video signal in dependence upon the detected head motion, the controller acting to compensate for the lower frequency component of motion of the observer's head by moving the displayed image in the opposite direction to that of the detected motion so as to change the apparent viewpoint of the observer in the direction of the detected motion, and to compensate for the higher frequency component of motion of the observer's head by moving the displayed image in the same direction as that of the detected motion.

13. Computer software for carrying out a method according to claim 12.

14. A storage medium by which computer software according to claim 13 is stored.
